# EUROPEAN PATENT SPECIFICATION

(11) **EP 0 438 618 B1**
(45) Date of publication and mention of the grant of the patent: **17.04.1996**
(21) Application number: 90101385.4
(22) Date of filing: 24.01.1990
(51) Int. Cl.: G01N 30/30

(54) **Apparatus for thermostating the mobile phase in a liquid chromatograph**
Vorrichtung zur Temperaturregelung der mobilen Phase in einem Flüssigchromatographen
Dispositif à régulation de température d'une phase mobile d'un chromatographe à phase liquide

(43) Date of publication of application: 31.07.1991
(73) Proprietor: Hewlett-Packard GmbH, D-71004 Böblingen (DE)
(72) Inventor: Schneider, Werner, D-7505 Ettlingen (DE); Witt, Klaus, D-7538 Keltern (DE)
(74) Representative: Harbach, Thomas

(56) References cited:
- DE-A- 2 306 093
- DE-U- 8 536 810
- GB-A- 2 068 539

## Description

The invention relates to an apparatus for thermostating the mobile phase in a liquid chromatograph in accordance with the preamble of claim 1.

The separation process in the column of a liquid chromatograph is temperature dependent, i.e., the chromatographic retention times of sample substances to be analysed are a function of temperature. Also, the chromatographic resolution power, i.e., the separation of the various peaks in the chromatogram corresponding to different sample substances, is a function of temperature so that temperature selection can be used in a systematic manner to adjust the best conditions for a specific separation problem. To ensure reproducible chromatographic results it is desirable that the temperature is maintained constant during the separation process. There are known chromatographs which comprise means to adapt the temperature of the incoming solvent stream to that of the column to minimize chromatographically disturbing temperature gradients in the column bed. In many chromatographic applications, a temperature in the range between 25°C and 100°C is used.

An apparatus according to the preamble of claim 1 for thermostating the mobile phase in a liquid chromatograph is known from EP-A1 0 043 946 . In this known apparatus, the separation column is arranged in a housing of heat insulating material in which air is circulated by means of a fan. The air circulating in the housing is heated when it flows past an electrical heating element; thereafter, the air flows past the column and brings it to an elevated temperature. In order to achieve pre-heating of the liquid flowing into the column, a portion of the ingoing capillary connected to the column entrance is arranged inside the heating element. The solvent stream leaving the column with the separated sample substances is then conducted to a suitable detector, for example to a photometric absorbance detector.

The detectors typically used in liquid chromatography are temperature sensitive so that the measuring accuracy can be impaired by temperature effects. A common problem is, for example, refractive index variations which are caused by differences in the temperatures of the solvent and the detector cell. These variations lead to noise in the measured absorbance signal; unfortunately, the level of this disturbing noise gets higher with increasing temperature differences.

Taking into account that the external band spreadening which impairs the chromatographic selectivity and resolution should be kept small, it is necessary that the connection between the column outlet and the detector be as short as possible. Due to the required short path between the column outlet and the detector, the solvent from a column operated at elevated temperature can carry such heat loads to the detector that the above mentioned problems become very disturbing. The known way to cope with these problems is to provide the detector with extra heat exchangers which are to reduce the temperature difference by dissipating at least a portion of the heat into the air surrounding the detector. This approach, however, requires extra capillary tubes resulting in higher external band-spreadening, and makes the instrument more complex and costly.

From DE-U- 8 536 810 , an apparatus for thermostating the mobile phase in a liquid chromatograph is known, wherein the chromatographic column is arranged in a recess inside a metal block which can be heated or cooled. In GB-A- 2 068 539 , a refractive index detector for a liquid chromatograph is disclosed, wherein the column of the chromatograph and the detector are arranged in a common oven and wherein the inlet tube of the detector is in heat-exchanging relationship with its outlet tube.

Relative to the prior art, the invention according to claim 1 solves the problem to provide an apparatus for thermostating the separation column of a liquid chromatograph as in the preamble of claim 1, which has a less complex design and which at least reduces, and, for a wide range of applications, avoids the mentioned problems associated with heat transportation out of the column.

According to an underlying principle of the invention, the ingoing capillary coming from the injector of the liquid chromatograph and connected to the entrance of the column and the outgoing capillary connected to the exit of the column and leading to the detector, are arranged in thermal contact with each other along a segment of their length so that heat can be exchanged between the two capillaries. In that way, the liquid leaving the column at an elevated temperature gives off a large part of the heat which it transports, thus avoiding or at least substantially reducing the disturbing heat transportation to the detector which would impair the measuring accuracy. At the same time, the solvent flowing to the column is pre-heated by the liquid leaving the column gives so that, according to an additional effect associated with the invention, the heating power required for bringing the mobile phase to the desired temperature is reduced as compared with prior art thermostating arrangements.

According to the invention, the column is held in thermal contact with a receiving piece which can be heated to a desired temperature by a temperature influencing means. Due to the thermal coupling between ingoing and outgoing capillaries, the liquid entering the column is pre-heated.

According to an embodiment of the invention, the heat exchanger can be realized by soldering together two conventional circular capillaries at their walls. This arrangement has the advantage that it is very simple to manufacture and does not require extra parts. According to another embodiment, the capillaries have an elongated cross sectional shape so that the contact area in the heat exchanging section is increased.

The invention is also of particular advantage when the column is cooled in order to extend the working temperature range for the chromatographic analysis to lower temperatures . Typical cooling elements, for example Peltier elements, have a comparatively small efficiency, so that a recovery of cooling power is particularly important in order to keep the power consumption and the requirements regarding power electronics small.

In those applications of the invention where the mobile phase is to be heated, the temperature influencing means can be a flat-foil heating element attached to the receiving piece, contributing to a mechanically simple design of the thermostating arrangement. The temperature influencing means may comprise a control loop with a temperature sensor in contact with the receiving piece and a controllable current source providing a current output to the resistance heating in response to the difference between the measured temperature and a desired temperature. In an embodiment of the invention, the control of the current supplied to the resistance heating is achieved using pulse width modulation, which has the advantage that it leads to a decreased power consumption.

In order to achieve a still more efficient transfer of thermal energy to the incoming mobile phase, the incoming capillary can be arranged in a recess of the receiving piece , whereby the recess with the capillary can additionally be filled with solder. In order to ensure a fast-response control of the mobile phase temperature, the temperature sensor is positioned in close proximity to the incoming capillary, preferably above the recess wherein the capillary is arranged.

Summarizing the concept of the invention, by guiding the ingoing and outgoing capillaries in contact with each other along a certain portion of their length, an efficient heat exchange can be achieved and yet this heat exchanger has a very simple design making use of components which are anyhow required in a liquid chromatograph, namely the ingoing and outgoing capillaries. According to the invention, no additional tubing is required so that no further external bandspreading is introduced. The thermostating arrangement of the invention provides very efficient heat exchange because of several reasons: First, the heat exchange between liquids (inflowing and outflowing liquid) as in the invention is much more efficient than the heat exchange between liquid and air as in conventional thermostating arrangements, second, it has turned out that the use of capillaries with small internal diameter results in substantially enhanced heat transmission from the capillary walls to the mobile phase. Due to the efficient heat exchange achieved by the invention, the (electrical) power required for the adjustment of a desired temperature is comparatively small.

Subsequently, embodiments of the invention are explained in more detail with reference to the drawings.
- Figure 1: schematically shows an embodiment of a thermostating arrangement of the invention, partially in a perspective view.
- Figure 2: shows a cross section along the plane A shown in Figure 1.
- Figure 3a: shows a part of the thermostating arrangement of Figure 1 in more detail.
- Figure 3b: shows a cross section along the line A-B in Figure 3a.
- Figure 3c: is a magnified view of the detail X in Figure 3b.
- Figures 4a-4c: show three alternative embodiments for the connection of the two capillary tubes in the plane A indicated in Figure 1.
- Figure 5: shows a typical temperature curve for the mobile phase at various locations in the thermostating arrangement of Figure 1.

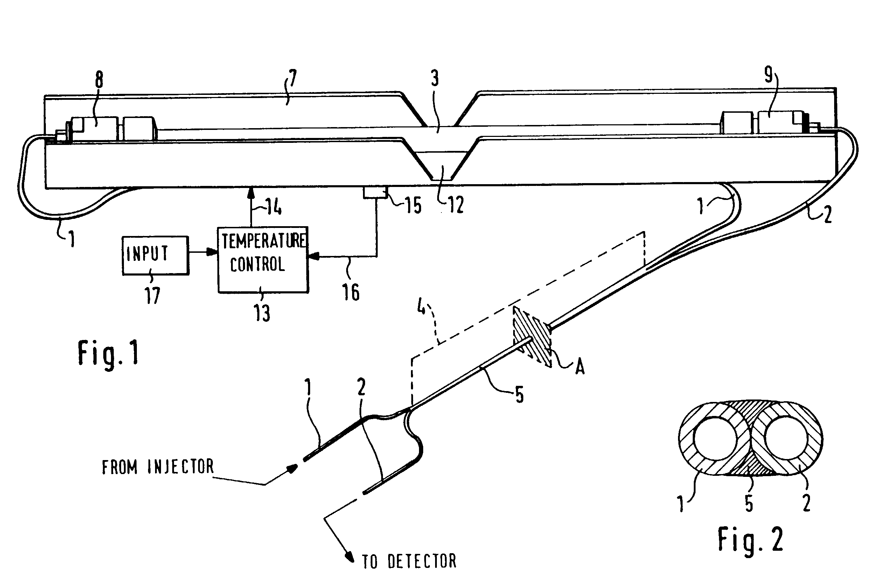

Figure 1 shows a first embodiment of the invention for thermostating the mobile phase in a liquid chromatograph. The separation column 3 which has the shape of a cylinder is arranged in an elongated receiving piece 7 having a U-shaped cross section. The receiving piece 7 is made of a material which has good thermal conductivity, for example aluminum. The column 3 which typically comprises an outer metal tube (e.g. from stainless steel), is arranged in good thermal contact with the receiving piece 7. The metal piece 7 comprises a recess 12 to permit easy removal of the column by an operator.

The receiving piece 7 is connected to a temperature influencing system for bringing the metal piece 7 and thus the column 3 to a desired temperature value which may be above or below ambient temperature. In an embodiment of the invention, the temperature influencing system comprises an electrical resistance heating which is arranged at the bottom side of the mean portion of the U-shaped piece 7 and comprises a flat-foil heating element with conductive paths embedded in a thin foil.

The temperature produced in the receiving piece 7 by this resistance heating can be controlled by the current supplied from a temperature control unit 13 via a line 14 to the resistance heating. The supply of current from unit 13 occurs in response to the actual temperature of piece 7 measured by a temperature sensor 15 which is in thermal contact with the piece 7. A desired temperature value can be adjusted by a user via an input means 17. A signal corresponding to this desired value is compared by the temperature control unit 13 with the signal indicative of the actually measured temperature supplied via line 16. The current supplied to the resistance heating is then controlled in response to the difference between desired and actual value. According to a preferred embodiment of the invention, the temperature control unit 13 operates in a pulse width control mode, i.e., the current is supplied to the resistance heating as pulses at a fixed frequency, but with variable pulse width. The pulse width is adjusted by control unit 13 such that the temperature of the piece 7 is maintained at the desired value. According to a practical example, the pulses occur at a fixed rate of 30 kHz with a pulse width of up to 32 microseconds. The pulse width control mode has the advantage that it has a reduced power consumption as compared to other control modes.

According to another embodiment of the invention, a combined heating and cooling system in thermal contact with the metal piece 7 could be provided which allows the adjustment of temperatures above as well as below ambient temperature with the cooling elements being, for example, Peltier elements.

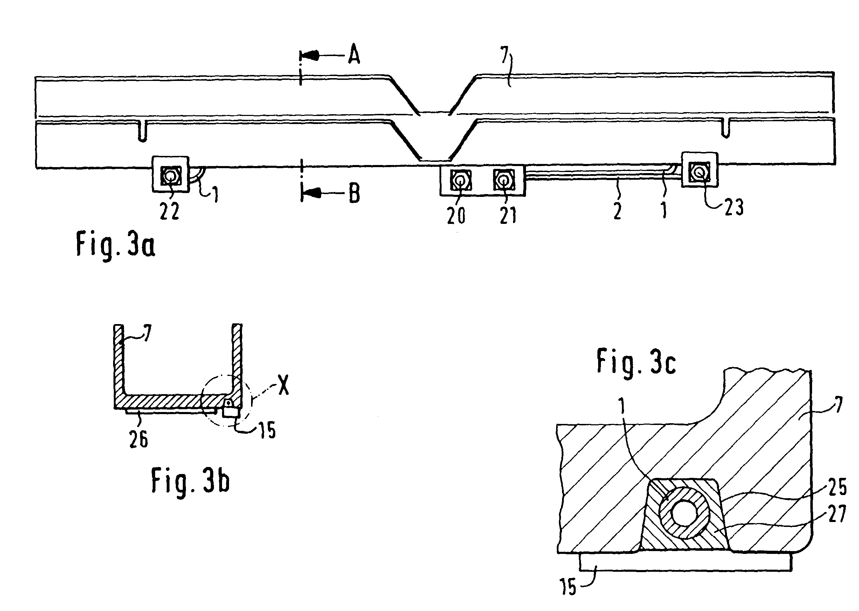

As shown in Figure 1, the column 3 comprises end fittings 8 and 9 for connecting capillary tubes 1 and 2, respectively, to the column. The capillary 1 is the ingoing capillary through which solvent and sample to be chromatographically analysed are introduced into the column, and the capillary 2 is the outgoing capillary through which the solvent and the chromatographically separated sample leaves the column and is fed to a detector, for example to a photometric detector, a fluorescence detector, an electrochemical detector, or a refractive index detector. The ingoing capillary 1 shown in Figure 1 is arranged in good thermal contact with the bottom side of the metal piece 7 , as will be explained in more detail with reference to Figures 3b and 3c.

According to an important aspect of the invention, the two capillaries 1 and 2 are in contact with each other in a region 4 so that good heat transfer between the two capillaries is possible. In the embodiment shown, the two capillaries are brought in contact with each other and connected by means of solder. The region 4 in which the capillaries are connected with each other typically has a length of approximately 13 cm. Thus, in chromatographic applications wherein the mobile phase is to be heated, the liquid leaving the column 3 through the outgoing capillary 2 dissipates heat to the liquid flowing to the column in the ingoing capillary 1. In that way, the liquid to the column is pre-heated so that less heating power is required in the electrical heating of metal piece 7. Furthermore, the temperature of the liquid leaving the column is reduced so that the amount of heat transported to the detector is reduced.

Figure 2 shows a cross section along the plane A perpendicular to the longitudinal axis of the capillaries to illustrate the connection of the two capillaries in the region 4. The capillaries 1 and 2 are shown to have a circular cross section and to be in contact at their periphery. The capillaries in a practical example of the invention have an internal diameter of approximately 0,17 mm, and an outer diameter of 0,6 mm. The gap between the capillaries is filled with solder 5. The solder 5 serves for a fixed connection between the capillaries, and at the same time increases the thermal coupling between them. The capillaries can be arranged parallel to each other in the region 4 , or they may twisted with a few turns on the whole length. The capillaries are made of stainless steel; alternative materials could be titanium or tantalum.

In a preferred embodiment of the invention, the receiving piece 7 with the column 3 and the capillaries 1,2 connected in the region 4 are arranged in the housing of a liquid chromatography module. In that case, the free ends of the capillaries 1 and 2 are equipped with tube fittings so that the injector of the liquid chromatograph can be connected to capillary 1 , and capillary 2 can be connected to a suitable detector.

Figure 3a shows the receiving piece 7 for such an embodiment with an input fitting 20 for connection to an injector and an output fitting 21 for connection to a detector. Fittings 22 and 23 arranged at the left and right lower side of the piece 7, respectively, receive the capillaries (not shown) connected to the entrance and exit of the chromatographic column, respectively. Connected to the rear side of the fitting 23 is a capillary 2 connected with its other end to the rear side of the output fitting 21. The capillary 1 connected to the rear side of the input fitting 20 is arranged in thermal contact with the capillary 2 along a certain distance indicated between the fittings 21 and 23. This area of thermal contact between the two capillaries corresponds to the area 4 shown in Figure 1. The capillary 1 is conducted, after it has extended in thermal contact with capillary 2 in the region 4 (Figure 1) , along the bottom of piece 7 up to the rear side of fitting 22, to which it is fixed.

The cross sectional view along the line A-B (Figure 3a) as shown in Figure 3b and the magnified view of the detail X illustrate how the capillary 1 is arranged in the bottom of receiving piece 7. As can be seen from Figure 3c, the capillary 1 extends in a recess 25 of the piece 7 and the recess is filled with solder 27 to provide good mechanical connection and thermal contact with the piece 7. The flat-foil heating element 26 is attached to the bottom of piece 7 in thermal contact therewith as shown in Figure 3b. The foil extends substantially over the entire length of the piece 7. The temperature sensor 15 is arranged besides the heater foil 26 below the recess 25 wherein the capillary 1 extends (see Figure 3c). Thus, the temperature sensor 15 is close to the location where the mobile phase to be thermostated flows, so that a fast-response control of the mobile phase temperature is ensured.

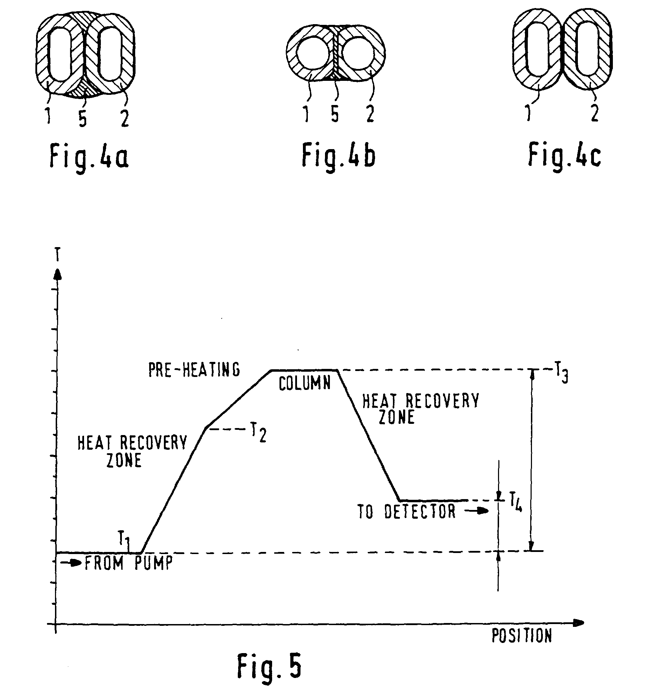

Figures 4a-4c show three alternative embodiments for the connection of the two capillary tubes in the region 4, whereby each of the three figures corresponds to a cross section in the plane A illustrated in Figure 1. According to Figure 4a, the capillaries have an elongated cross sectional profile so that the contact area between the capillaries is greater than in case of capillaries with circular cross section, thus contributing to a still more efficient heat exchange between the capillaries. Another way to improve the thermal contact between the two capillaries is shown in Figure 4b: A portion of the wall of the circular capillaries 1 and 2 is removed and the two capillaries are connected at the sides where the wall portion was removed. In that way, the contact area between the two capillaries is increased and the wall thickness is reduced, both measures contributing to an improved heat transfer. In the embodiment of Figure 4b as well as in Figure 4a, the gaps between the capillaries are filled with solder 5 to establish a fixed connection between the capillaries and to improve their thermal coupling. In the embodiment of Figure 4c, no additional material like solder 5 is required, but the capillaries 1 and 2 are directly connected with their walls by means of, for example, laser or electron beam welding.

In order to obtain good heat exchange between ingoing and outgoing capillaries in their contact area, it is important to keep the thermal resistance between the ingoing and outgoing liquid paths as small as possible. One measure contributing to the achievement of this goal is to select materials, e.g., for the capillaries, which have high thermal conductivity. The heat exchange behaviour, however, is also influenced by the environment of the capillaries because there are secondary thermal paths which affect the overall performance, e.g., heat conduction through the surrounding air or heat radiation. For reducing these influences, measures can be applied to thermally insulate the contact region 4 of the ingoing and outgoing capillaries from the environment. For example, the two capillaries contacting each other can be embedded in heat insulating material , or they can be arranged in an evacuated housing preventing heat conduction through the air.

In Figure 5 is shown a typical temperature curve for the mobile phase flowing through the thermostating arrangement and the column according to an embodiment of the invention wherein the mobile phase is heated above ambient temperature. The horizontal axis depicts the position of the mobile phase in the capillary system and the vertical axis is the corresponding temperature of the mobile phase at this position. The mobile phase enters the thermostating arrangement from the pump and injector of the liquid chromatograph at a temperature of T₁ (temperature of the mobile phase at the input fitting 20, Figure 3a). In the section of the capillary system where the ingoing and the outgoing capillary are in contact with each other (section 4 in Figure 1), the temperature rises continuously from T1 to T2 , represented in Figure 5 by the portion labelled "Heat Recovery Zone". The portion of the curve labelled "Pre-heating" corresponds to the section of the capillary system arranged in the recess of the piece 7 wherein the temperature of the mobile phase is brought to its final value T₃ at the entrance of the chromatographic column. During its passage through the column, the temperature remains substantially constant at the value T₃. Then, in the section where the outgoing capillary is in contact with the ingoing capillary (section 4 in Figure 1), the mobile phase leaving the column gives off heat so that the temperature drops from T₃ to T₄ which is the temperature with which the mobile phase flows to the detector.

## Claims

1. An apparatus for thermostating the mobile phase in a liquid chromatograph, comprising :
- an ingoing capillary (1) connected with its one end to the inlet of the column (3), and connectable with its other end to the injector of the liquid chromatograph,
- an outgoing capillary (2) connected with its one end to the outlet of the column (3) , and connectable with its other end to a detector of the liquid chromatograph,
- a receiving piece (7) in thermal contact with the separation column (3),
- temperature influencing means (13,26) for heating or cooling the receiving piece (7) in a controllable way,
**characterized** in that
a portion of the ingoing capillary (1) and a portion of the outgoing capillary (2) are arranged in thermal contact with each other along a segment of their length, forming a contact region (4) wherein heat exchange between the ingoing capillary (1) and the outgoing capillary (1) can occur, said contact region being arranged outside a detector of the liquid chromatograph.

2. An apparatus as in claim 1, wherein the temperature influencing means comprises an electrical resistance heating (26) and/or a cooling element, for example a Peltier element.

3. An apparatus as in claim 1 or 2, wherein the temperature influencing means (13) comprises a flat-foil heating element (26) attached to the receiving piece (7).

4. An apparatus as in claim 3, wherein pulse with modulation circuitry is provided for supplying current pulses to the heating element (26), with the widths of the current pulses being controlled in response to an actual temperature value measured by a temperature sensor (15) connected to the receiving piece (7), such that the receiving piece is maintained at a desired temperature.

5. An apparatus as in any of the preceding claims , wherein a portion of the ingoing capillary (1) is arranged in a recess (25) of the receiving piece (7).

6. An apparatus as in claim 6 , wherein a temperature sensor (15) is arranged above the recess (25) close to the ingoing capillary (1).

7. An apparatus as in any of the preceding claims, wherein the receiving piece comprises a sectional piece (7) of metal, and the column (3) is arranged in the interior of the sectional piece.

8. An apparatus as in any of the preceding claims, wherein:
- the capillaries (1,2) have circular cross section with the walls contacting each other in the contact region (4),
- the areas between the two contacting capillaries are filled with solder (5).

9. An apparatus as in any of the claims 1 to 7, wherein the capillaries (1,2) in the contact region (4) have an elongated cross section (Figures 4a, 4c) and are in flat contact with each other.

## Patentansprüche

1. Vorrichtung zur Temperaturregelung der mobilen Phase in einem Flüssigchromatographen, die folgendes umfaßt:
- Eingangskapillare (1), die an einem Ende mit dem Eingang der Säule (3) und am anderen Ende mit dem Injektor des Flüssigchromatographen verbunden ist,
- Ausgangskapillare (2), die an einem Ende mit dem Ausgang der Säule (3) verbunden ist und am anderen Ende mit einem Detektor eines Flüssigchromatographen verbunden werden kann,
- Aufnahmeteil (7), das in thermischem Kontakt mit der Trennsäule (3) steht,
- Temperatursteuersysteme (13, 26) zum steuerbaren Erwärmen oder Kühlen des Aufnahmeteils (7),
dadurch **gekennzeichnet**, daß
ein Teil der Eingangskapillare (1) und ein Teil der Ausgangskapillare (2) über einen bestimmten Anteil ihrer Länge hinweg in thermischem Kontakt miteinander angeordnet sind, wobei ein Kontaktbereich (4) entsteht, in dem der Wärmeaustausch zwischen Eingangskapillare (1) und Ausgangskapillare (2) möglich ist, und dieser Kontaktbereich außerhalb eines Detektors des Flüssigchromatographen angeordnet ist.

2. Vorrichtung gemäß Anspruch 1, wobei das Temperatursteuersystem aus einer elektrischen Widerstandsheizung (26) und/oder einem Kühlelement, beispielsweise einem Peltier-Element, besteht.

3. Vorrichtung gemäß Anspruch 1 oder 2, wobei das Temperatursteuersystem (13) aus einem an das Aufnahmeteil (7) angeschlossenen Flachfolienheizelement (26) besteht.

4. Vorrichtung gemäß Anspruch 3, bei der das Heizelement (26) über Pulsbreiten-Modulation mit Stromimpulsen versorgt wird, wobei die Breite der Stromimpulse gesteuert wird in Reaktion auf die Temperaturwerte, die ein am Aufnahmeteil (7) angeschlossener Temperatursensor (15) ermittelt, und so die Temperatur des Aufnahmeteils auf einem gewünschten Wert gehalten wird.

5. Vorrichtung gemäß einem der vorangehenden Ansprüche, wobei ein Teil der Eingangskapillare (1) in einer Aussparung (25) des Aufnahmeteils (7) angeordnet ist.

6. Vorrichtung gemäß Anspruch 5, wobei ein Temperatursensor (15) über der Aussparung (25) nahe bei der Eingangskapillare (1) angebracht ist.

7. Vorrichtung gemäß einem der vorangehenden Ansprüche, wobei das Aufnahmeteil ein Teilstück (7) aus Metall enthält, und die Säule (3) im Innenraum dieses Teilstücks untergebracht ist.

8. Vorrichtung gemäß einem der vorangehenden Ansprüche, wobei:
- die Kapillaren (1, 2) einen runden Querschnitt aufweisen und sich deren Wände im Kontaktbereich (4) berühren,
- der Bereich zwischen den sich berührenden Kapillaren mit Lötzinn (5) ausgefüllt ist.

9. Vorrichtung gemäß einem der Ansprüche 1 bis 7, wobei die Kapillaren (1, 2) im Kontaktbereich (4) einen länglichen Querschnitt aufweisen (Abbildungen 4a, 4c) und sich in flachem Kontakt berühren.

## Revendications

1. Dispositif pour réguler en température la phase mobile d'un chromatographe à phase liquide, comprenant:
- un capillaire d'entrée (1), connecté à une extrémité à l'entrée de la colonne (3), et pouvant être connecté à son autre extrémité à l'injecteur du chromatographe à phase liquide,
- un capillaire de sortie (2), connecté à une extrémité à la sortie de la colonne (3), et pouvant être connecté à son autre extrémité à un détecteur du chromatographe à phase liquide,
- une pièce réceptrice (7), en contact thermique avec la colonne de séparation (3),
- un moyen de modification de température (13, 26), pour chauffer ou refroidir la pièce réceptrice (7) d'une façon pouvant être commandée,
caractérisé en ce que
une partie du capillaire d'entrée (1) et une partie du capillaire de sortie (2) sont disposées en contact thermique entre elles, le long d'un segment de leur longueur, formant une région de contact (4), dans laquelle l'échange de chaleur entre le capillaire d'entrée et le capillaire de sortie (1) peut se produire, ladite région de contact étant disposée à l'extérieur d'un détecteur du chromatographe à phase liquide.

2. Dispositif selon la revendication 1, dans lequel le moyen de modification de température comprend une résistance chauffante électrique (26) et/ou un élément de refroidissement, par exemple un élément à effet Peltier.

3. Dispositif selon la revendication 1 ou 2, dans lequel le moyen de modification de température (13) comprend un élément chauffant en feuille plate (26) fixé à la pièce réceptrice (7).

4. Dispositif selon la revendication 3, dans lequel un circuit à modulation de largeur d'impulsions est disposé pour délivrer des impulsions de courant à l'élément chauffant (26), les largeurs des impulsions de courant étant commandées en réponse à une valeur de température réelle mesurée par un capteur de température (15), connecté à la pièce réceptrice (7), de façon que la pièce réceptrice soit maintenue à une température désirée.

5. Dispositif selon l'une quelconque des revendications précédentes, dans lequel une partie du capillaire d'entrée (1) est aménagée dans une cavité (25) de la pièce réceptrice (7).

6. Dispositif selon la revendication 6, dans lequel un capteur de température (15) est aménagé au-dessus de la cavité (25), près du capillaire d'entrée (1).

7. Dispositif selon l'une quelconque des revendications précédentes, dans lequel la pièce réceptrice comprend une pièce sectionnelle (7) faite de métal, et la colonne (3) est aménagée à l'intérieur de la pièce sectionnelle.

8. Dispositif selon l'une quelconque des revendications précédentes, dans lequel:
- les capillaires (1, 2) ont une coupe transversale circulaire, les parois étant en contact entre elles dans la région de contact (4),
- les zones situées entre les deux capillaires en contact sont remplies de soudure (5).

9. Dispositif selon l'une quelconque des revendications 1 à 7, dans lequel les capillaires (1, 2) dans la région de contact (4), ont une coupe transversale allongée (figures 4a, 4c), et sont en contact plat entre eux.
